# EUROPÄISCHE PATENTSCHRIFT

(11) **EP 1 081 017 B1**
(45) Veröffentlichungstag und Bekanntmachung des Hinweises auf die Patenterteilung: **04.04.2007**
(21) Anmeldenummer: 00119022.2
(22) Anmeldetag: 01.09.2000
(51) Int. Cl.: B62D 5/09, B62D 5/07, B62D 6/00

(54) **Lenkvorrichtung für ein Flurförderzeug**
Steering device for an industrial truck
Dispositif de direction pour chariot de manutention

(30) Priorität: 02.09.1999 DE 19941883
(43) Veröffentlichungstag der Anmeldung: 07.03.2001
(73) Patentinhaber: STILL GMBH, D-22113 Hamburg (DE); ROBERT BOSCH GMBH, 70442 Stuttgart (DE)
(72) Erfinder: Bavendiek, Rainer, Dr.-Ing., 21465 Wentorf (DE); Neuf, Ottmar, Dipl.-Ing. (FH), 21465 Reinbek (DE); Lindemann, Bernd, Dr.-Ing., 21244 Buchholz (DE); Meyer, Jörg, Dipl.-Ing, 49835 Wietmarschen (DE); Kötter, Wolfgang, 71706 Markgröningen (DE); Müller, Gerhard, 75057 Kürnbach (DE); Jahns, Claus-Peter, 21107 Hamburg (DE)
(74) Vertreter: Kasseckert, Rainer

(56) Entgegenhaltungen:
- EP-A- 0 502 456
- US-A- 5 003 480
- US-A- 5 247 441
- US-A- 5 513 551
- US-A- 5 896 943

## Beschreibung

Die Erfindung betrifft eine Lenkvorrichtung, insbesondere für ein Flurförderzeug, mit einer Hydraulikpumpe, die über ein Lenkventil mit einem hydraulischen Stellglied verbunden ist, und einem Lenkgeber, der mit dem Lenkventil in Wirkverbindung steht, wobei mit dem Lenkgeber ein elektrisches Lenksignal erzeugbar ist und der Lenkgeber mit einem elektrischen Steuergerät verbunden ist und das Lenkventil in Abhängigkeit von dem Lenksignal durch das Steuergerät ansteuerbar ist. Die Erfindung betrifft ebenfalls ein Fahrzeug, insbesondere Flurförderzeug mit einer derart ausgeführten Lenkvorrichtung.

Der Lenkgeber einer gattungsgemäßen Lenkvorrichtung weist, wie bei Fahrzeugen üblich, ein Lenkrad auf. Bei Lenkvorrichtungen von Flurförderzeugen besteht in der Regel keine mechanische Verbindung zwischen dem Lenkrad und dem mindestens einen gelenkten Rad. Die zum Lenken erforderliche Kraft wird ausschließlich mit einem hydraulischen Stellglied, beispielsweise einem Lenkzylinder oder einem Lenkmotor, erzeugt, der über ein Lenkventil von der Hydraulikpumpe mit Hydrauliköl versorgt wird.

Bei Lenkvorrichtungen des Standes der Technik ist häufig ein hydraulisches Lenkventil vorgesehen, das Bestandteil des Lenkgebers ist und eine mechanische Verbindung zu dem Lenkrad aufweist. Ein derartiges Lenkventil, das auch als Orbitrol bezeichnet wird, regelt die dem Stellglied zugeführte Hydraulikölmenge bei einer Drehung des Lenkrads derart, daß der Drehwinkel des Lenkrads im wesentlichen proportional zu dem Lenkwinkel des gelenkten Rads ist. Eine derartige hydraulische Lenkvorrichtung besteht aus einer Vielzahl von Bauteilen. Da das Lenkventil im Bereich des Lenkrads oder einer Lenksäule angeordnet werden muß, sind zahlreiche hydraulische Leitungen und Verschraubungen erforderlich.

Eine die oben genannten Merkmale aufweisende Vorrichtung zur Hinterradlenkung bei einem PKW mit Vierradlenkung ist in der US 5 003 480 beschrieben. Die Umsetzung des von dem Lenkgeber erzeugten elektrischen Lenksignals in ein Steuersignal zur elektrischen Ansteuerung eines Hydraulikventils erfolgt dabei mittels eines aufwendigen Berechnungsalgorithmus, welcher die Auswahl Parametern für die Berechnung nach Maßgabe der aktuellen Fahrgeschwindigkeit des Fahrzeugs umfasst. Dieses dokument weist die Merkmale des Oberbegriffs des Anspruchs 1 auf.

Der vorliegenden Erfindung liegt daher die Aufgabe zugrunde, eine Lenkvorrichtung und ein Fahrzeug mit einer solchen Lenkvorrichtung zur Verfügung zu stellen, die auf einfache Weise eine sichere Lenkfunktion gewährleistet.

Diese Aufgabe wird erfindungsgemäß dadurch gelöst, daß das Steuergerät zur Ansteuerung des Lenkventils eine Kennfeldsteuerung aufweist wobei in dem Kennfeld zumindest die folgenden Größen berücksichtigt sind:
- die Winkelstellung des Lenkrads,
- die Winkelgeschwindigkeit des Lenkrads.

Der Lenkgeber weist ein Lenkrad auf, dessen Drehbewegung erfaßt und in ein elektrisches Lenksignal umgewandelt wird. Dieses Lenksignal kann beispielsweise mittels eines Potentiometers oder eines inkrementalen Drehwinkelgebers erzeugt werden. Anstelle des Lenkrads kann bei im übrigen gleichem Aufbau ein anderes Griffelement, z.B. ein Drehteller oder eine Lenkstange eingesetzt werden. Das die Drehstellung des Lenkrads wiedergebende Lenksignal wird in einem Steuergerät verarbeitet, das ein entsprechendes elektrisches Stellsignal für ein hydraulisches Lenkventil erzeugt. Das hydraulische Lenkventil stellt den dem hydraulischen Stellglied zugeführten Hydraulikölstrom in Abhängigkeit von dem elektrischen Stellsignal ein. Das Stellsignal für das Lenkventil wird in dem Steuergerät mittels eines Kennfelds ermittelt, wobei in dem Kennfeld neben der Winkelstellung des Lenkrads verschiedene andere Größen berücksichtigt sein können. Das Lenkventil ist in Abhängigkeit von einer Winkelstellung eines mit dem Lenksignalgeber verbundenen Lenkrads ansteuerbar. Die Winkelstellung des Lenkrads stellt die erste, im Kennfeld des Steuergeräts berücksichtigte Größe dar. Der Begriff Lenkrad umfaßt im Sinne der vorliegenden Erfindung auch alternative Formgebungen, z.B. einen Drehteller oder eine Lenkstange. Weiterhin ist das Lenkventil in Abhängigkeit von einer Winkelgeschwindigkeit eines mit dem Lenksignalgeber verbundenen Lenkrads ansteuerbar. Die Winkelgeschwindigkeit, also die zeitliche Ableitung der Winkelstellung, ist die zweite im Kennfeld des Steuergeräts berücksichtigte Größe.

Bei der erfindungsgemäßen Lenkvorrichtung ist keine Rückführung eines Istwerts des Lenkwinkels zu dem elektrischen Steuergerät vorgesehen. Somit sind keine Sensoren zum Erfassen der Stellung des gelenkten Rads oder zum Erfassen der Stellung des hydraulischen Stellglieds erforderlich. Im Gegensatz zu den im Stand der Technik bekannten Systemen liegt somit keine Regelung, sondern eine Steuerung vor.

Als dritte relevante Größe ist im Kennfeld die zweite zeitliche Ableitung der Winkelstellung, also die Winkelbeschleunigung berücksichtigt. Das Lenkventil ist somit in Abhängigkeit von einer Winkelbeschleunigung eines mit dem Lenksignalgeber verbundenen Lenkrads ansteuerbar.

Besondere Vorteile ergeben sich, wenn das Lenkventil als ein elektrisch betätigbares Proportionalventil ausgeführt ist. Mit dem Proportionalventil kann die dem hydraulischen Stellglied zugeführte Hydraulikölmenge stufenlos eingestellt werden. Das Proportionalventil kann als Schieberventil ausgeführt sein und wird elektromagnetisch betätigt. Die Bauweise des Proportionalventils kann den für die Arbeitshydraulikeinheit eines Flurförderzeugs üblicherweise verwendeten Wegeventilen gleichen.

Bezüglich des Fahrzeugs wird die eingangs gestellte Aufgabe dadurch gelöst, daß eine Lenkvorrichtung entsprechend der beschriebenen Merkmale vorgesehen ist.

Besondere Vorteile ergeben sich, wenn das Lenkventil der Lenkvorrichtung mit mindestens einem Wegeventil einer Arbeitshydraulikanlage des Fahrzeugs eine Baueinheit bildet. Das Lenkventil kann dabei als Teil eines Ventilblocks der Arbeitshydraulikanlage des Fahrzeugs ausgebildet sein. Das Hydrauliköl kann somit direkt, also ohne zwischengeschaltete Leitungen, von einem Gehäuse des Lenkventils in ein Wegeventil der Arbeitshydraulikanlage geleitet werden.

Darüber hinaus ist ein Prioritätsventil vorgesehen, das mit dem Lenkventil der Lenkvorrichtung eine Baueinheit bildet. Das Prioritätsventil stellt sicher, daß die Lenkvorrichtung in jeder Betriebssituation ausreichend mit Hydrauliköl versorgt wird. Damit ist gewährleistet, daß die Lenkung des Fahrzeugs unabhängig von dem Hydraulikölbedarf anderer Verbraucher jederzeit funktioniert. Ein Gehäuse des Prioritätsventils ist direkt mit dem Gehäuse des Lenkventils verbunden, womit eine kompakte Hydraulikventileinheit entsteht.

Gemäß einer zweckmäßigen Weiterbildung der Erfindung sind das Lenkventil der Lenkvorrichtung und mindestens ein Wegeventil der Arbeitshydraulikanlage von dem selben Steuergerät ansteuerbar. Mit dem Steuergerät werden neben der Lenkradstellung zusätzlich die Stellungen verschiedener Bedienelemente für andere hydraulische Verbraucher, bei einem Flurförderzeug z.B. der Hubzylinder, der Neigezylinder und hydraulische Zusatzgeräte, erfaßt, ausgewertet und die jeweiligen Wegeventile entsprechend angesteuert.

Weitere Vorteile und Einzelheiten der Erfindung werden anhand des in der schematischen Figur dargestellten Ausführungsbeispiels näher erläutert.

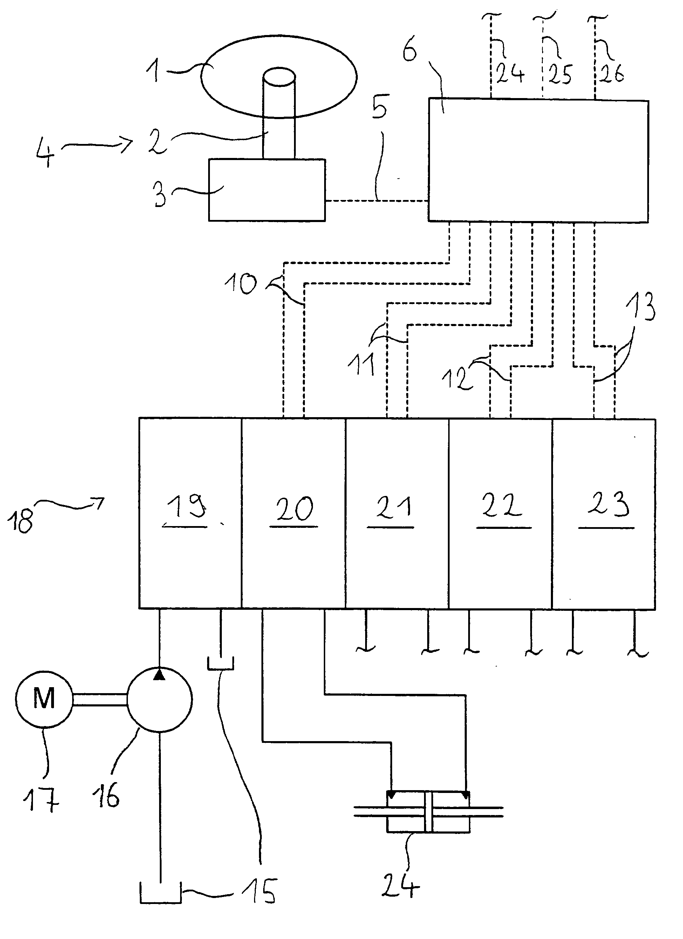

Die Figur zeigt die Schaltanordnung einer erfindungsgemäßen Lenkvorrichtung in einem Flurförderzeug.

Dargestellt ist ein Lenkrad 1, das über eine Lenkwelle 2 mit einem Lenksignalgeber 3 verbunden ist. Das Lenkrad 1, die Lenkwelle 2 und der Lenksignalgeber 3 bilden zusammen den Lenkgeber 4 der erfindungsgemäßen Lenkvorrichtung. Der Lenksignalgeber 3 erfaßt die Drehstellung des Lenkrads 1 und erzeugt hieraus ein elektrisches Lenksignal, das über eine Signalleitung 5 einem elektrischen Steuergerät 6 zugeführt wird.

In dem Steuergerät 6 wird aus dem die Drehstellung des Lenkrads 1 wiedergebenden Winkel die Drehgeschwindigkeit und die Drehbeschleunigung des Lenkrads 1 ermittelt. Mittels eines in dem Steuergerät 6 abgelegten Kennfelds wird in Abhängigkeit von dem Drehwinkel, der Drehgeschwindigkeit und der Drehbeschleunigung des Lenkrads 1 ein Stellsignal ermittelt, das über elektrische Steuerleitungen 10 einem Lenkventil 20 zugeführt wird. Bei der vorliegenden Kennfeldsteuerung ist keine Rückführung eines die tatsächliche Stellung des Lenkventils 20 oder den tatsächlichen Lenkwinkel wiedergebenden Istwertsignals erforderlich.

Das Lenkventil 20 ist als elektromagnetisch ansteuerbares Proportionalventil in Schieberbauweise ausgeführt, wobei mit den beiden dargestellten Steuerleitungen 10 eine am Lenkventil 20 angeordnete Vorsteuereinrichtung, z.B. ein Steuermagnet oder ein Schrittmotor, angesteuert wird.

Das Lenkventil 20 ist Bestandteil eines Wegeventilblocks 18 einer Hydraulikanlage des Flurförderzeugs. Die Hydraulikanlage umfaßt eine mittels eines Elektromotors 17 angetriebene Hydraulikpumpe 16, die Hydrauliköl aus einem Tank 15 ansaugt. Der Förderstrom der Hydraulikpumpe 16 wird direkt in eine Eingangssektion 19 des Wegeventilblocks geleitet, der ein Druckbegrenzungsventil, eine Eingangsdruckwaage und ein Prioritätsventil umfaßt. Die Eingangsdruckwaage verbindet die Hydraulikpumpe 16 direkt mit dem Tank 15, wenn von keinem der hydraulischen Verbraucher des Flurförderzeugs Hydrauliköl angefordert wird. Das Prioritätsventil teilt den zur Verfügung stehenden Hydraulikölstrom zwischen der Lenkvorrichtung und den übrigen hydraulischen Verbrauchern auf und stellt dabei sicher, daß die der Lenkvorrichtung zur Verfügung stehende Menge an Hydrauliköl in jeder Betriebssituation ausreicht.

Unmittelbar an die Eingangssektion 19 angeschlossen ist das Lenkventil 20, das eingangsseitig an die Eingangssektion angeschlossen ist und ausgangsseitig mit einem als doppeltwirkender, hydraulischer Lenkzylinder 24 ausgeführten Stellglied verbunden ist. Der Lenkzylinder 24 weist eine mechanische Verbindung zu einem lenkbaren Rad oder einer Lenkachse des Flurförderzeugs auf, wobei ein Verschieben des Kolbens des Lenkzylinders 24 zwangsweise eine Lenkbewegung des lenkbaren Rads bzw. der Lenkachse bewirkt.

Ebenfalls Bestandteil des Wegeventilblocks 18 sind ein Wegeventil 21 zur Versorgung eines hydraulischen Hubzylinders, ein Wegeventil 22 zur Versorgung eines Neigezylinders sowie mindestens ein Wegeventil 23 zur Versorgung mindestens eines hydraulischen Zusatzaggregats des Flurförderzeugs. Die Wegeventile 21-23 werden im vorliegenden Ausführungsbeispiel über Signalleitungen 11, 12, 13 von dem selben Steuergerät 6 angesteuert, wie das Lenkventil 20. Das Steuergerät weist hierzu entsprechende Eingangssignalleitungen 24, 25, 26 auf, die mit elektrischen Bedienelementen für die Hubvorrichtung, die Neigevorrichtung und für die Zusatzfunktion verbunden sind.

## Patentansprüche

1. Lenkvorrichtung, insbesondere für ein Flurförderzeug, mit einer Hydraulikpumpe (16), die über ein Lenkventil (20) mit einem hydraulischen Stellglied verbunden ist, und einem Lenkgeber (4), der mit dem Lenkventil (20) in Wirkverbindung steht, wobei mit dem Lenkgeber (4) ein elektrisches Lenksignal erzeugbar ist und der Lenkgeber (4) mit einem elektrischen Steuergerät (6) verbunden ist und das Lenkventil (20) in Abhängigkeit von dem Lenksignal durch das Steuergerät (6) ansteuerbar ist, **dadurch gekennzeichnet, daß** das Steuergerät (6) zur Ansteuerung des Lenkventils (20) eine Kennfeldsteuerung aufweist, wobei in dem Kennfeld zumindest die folgenden Größen berücksichtigt sind:
- die Winkelstellung des Lenkrads,
- die Winkelgeschwindigkeit des Lenkrads.

2. Lenkvorrichtung nach Anspruch 1, **dadurch gekennzeichnet, daß** keine Rückführung eines Istwerts eines Lenkwinkels eines gelenkten Rads zu dem elektrischen Steuergerät (6) vorgesehen ist.

3. Lenkvorrichtung nach Anspruch 1 oder 2, **dadurch gekennzeichnet, daß** das Lenkventil (20) in Abhängigkeit von einer Winkelbeschleunigung eines mit dem Lenksignalgeber (3) verbundenen Lenkrads (1) ansteuerbar ist.

4. Lenkvorrichtung nach einem der Ansprüche 1 bis 3, **dadurch gekennzeichnet, daß** das Lenkventil (20) als ein elektrisch betätigbares Proportionalventil ausgeführt ist.

5. Fahrzeug, insbesondere Flurförderzeug mit einer Lenkvorrichtung, mit einer Hydraulikpumpe (16), die über ein Lenkventil (20) mit einem hydraulischen Stellglied verbunden ist, und einem Lenkgeber (4), der mit dem Lenkventil (20) in Wirkverbindung steht, wobei mit dem Lenkgeber (4) ein elektrisches Lenksignal erzeugbar ist und der Lenkgeber (4) mit einem elektrischen Steuergerät (6) verbunden ist und das Lenkventil (20) in Abhängigkeit von dem Lenksignal durch das Steuergerät (6) ansteuerbar ist, **dadurch gekennzeichnet, daß** das Steuergerät (6) zur Ansteuerung des Lenkventils (20) eine Kennfeldsteuerung aufweist, wobei in dem Kennfeld zumindest die folgenden Größen berücksichtigt sind:
- die Winkelstellung des Lenkrads,
- die Winkelgeschwindigkeit des Lenkrads.

6. Fahrzeug nach Anspruch 5, **dadurch gekennzeichnet, daß** keine Rückführung eines Istwerts eines Lenkwinkels eines gelenkten Rads zu dem elektrischen Steuergerät (6) vorgesehen ist.

7. Fahrzeug nach Anspruch 5 oder 6, **dadurch gekennzeichnet, daß** das Lenkventil (20) in Abhängigkeit von einer Winkelbeschleunigung eines mit dem Lenksignalgeber (3) verbundenen Lenkrads (1) ansteuerbar ist.

8. Fahrzeug nach einem der Ansprüche 5 bis 7, **dadurch gekennzeichnet, daß** das Lenkventil (20) als ein elektrisch betätigbares Proportionalventil ausgeführt ist.

9. Fahrzeug nach einem der Ansprüche 5 bis 8, das Lenkventil (20) der Lenkvorrichtung mit mindestens einem Wegeventil (21, 22, 23) einer Arbeitshydraulikanlage des Fahrzeugs eine Baueinheit bildet.

10. Fahrzeug nach einem der Ansprüche 5 bis 9, **dadurch gekennzeichnet, daß** ein Prioritätsventil vorgesehen ist, das mit dem Lenkventil (20) der Lenkvorrichtung eine Baueinheit bildet.

11. Fahrzeug nach einem der Ansprüche 5 bis 10, **dadurch gekennzeichnet, daß** das Lenkventil (20) der Lenkvorrichtung und mindestens ein Wegeventil (21, 22, 23) der Arbeitshydraulikanlage von dem selben Steuergerät (6) ansteuerbar sind.

## Claims

1. Steering device, in particular for an industrial truck, having a hydraulic pump (16), which is connected to a hydraulic actuator via a steering valve (20), and a steering transmitter (4), which is operatively connected to the steering valve (20), it being possible for an electrical steering signal to be generated by the steering transmitter (4), and the steering transmitter (4) being connected to an electrical control device (6), and it being possible for the steering valve (20) to be driven by the control device (6) as a function of the steering signal, **characterized in that** the control device (6) for driving the steering valve (20) has characteristic mapping control, at least the following variables being taken into consideration in the characteristic map:
- the angular position of the steering wheel,
- the angular velocity of the steering wheel.

2. Steering device according to Claim 1, **characterized in that** no feedback of an actual value for a steering angle of a steered wheel to the electrical control device (6) is provided.

3. Steering device according to Claim 1 or 2, **characterized in that** the steering valve (20) can be driven as a function of an angular acceleration of a steering wheel (1) connected to the steering signal transmitter (3).

4. Steering device according to one of Claims 1 to 3, **characterized in that** the steering valve (20) is in the form of an electrically actuable proportional valve.

5. Vehicle, in particular industrial truck having a steering device, having a hydraulic pump (16), which is connected to a hydraulic actuator via a steering valve (20), and a steering transmitter (4), which is operatively connected to the steering valve (20), it being possible for an electrical steering signal to be generated by the steering transmitter (4), and the steering transmitter (4) being connected to an electrical control device (6), and it being possible for the steering valve (20) to be driven by the control device (6) as a function of the steering signal, **characterized in that** the control device (6) for driving the steering valve (20) has characteristic mapping control, at least the following variables being taken into consideration in the characteristic map:
- the angular position of the steering wheel,
- the angular velocity of the steering wheel.

6. Vehicle according to Claim 5, **characterized in that** no feedback of an actual value for a steering angle of a steered wheel to the electrical control device (6) is provided.

7. Vehicle according to Claim 5 or 6, **characterized in that** the steering valve (20) can be driven as a function of an angular acceleration of a steering wheel (1) connected to the steering signal transmitter (3).

8. Vehicle according to one of Claims 5 to 7, **characterized in that** the steering valve (20) is in the form of an electrically actuable proportional valve.

9. Vehicle according to one of Claims 5 to 8, **characterized in that** the steering valve (20) of the steering device forms a structural unit with at least one directional control valve (21, 22, 23) of a working hydraulic system of the vehicle.

10. Vehicle according to one of Claims 5 to 9, **characterized in that** a priority valve which forms a structural unit with the steering valve (20) of the steering device is provided.

11. Vehicle according to one of Claims 5 to 10, **characterized in that** the steering valve (20) of the steering device and at least one directional control valve (21, 22, 23) of the working hydraulic system can be driven by the same control device (6).

## Revendications

1. Dispositif de direction, notamment pour un chariot de manutention, comprenant une pompe hydraulique (16) qui est connectée par le biais d'une soupape de direction (20) à un actionneur hydraulique, et un mécanisme de direction (4) qui est en liaison coopérante avec la soupape de direction (20), un signal de direction électrique pouvant être produit avec le mécanisme de direction (4) et le mécanisme de direction (4) étant connecté à un appareil de commande électrique (6) et la soupape de direction (20) pouvant être commandée en fonction du signal de direction par l'appareil de commande (6), **caractérisé en ce que** l'appareil de commande (6) présente une commande de champ caractéristique pour la commande de la soupape de direction (20), au moins les valeurs suivantes étant prises en compte dans le champ caractéristique :
- la position angulaire du volant de direction,
- la vitesse angulaire du volant de direction.

2. Dispositif de direction selon la revendication 1, **caractérisé en ce qu'**il n'est prévu aucune rétroaction d'une valeur réelle d'un angle de direction d'une roue dirigée vers l'appareil de commande électrique (6).

3. Dispositif de direction selon la revendication 1 ou 2, **caractérisé en ce que** la soupape de direction (20) peut être commandée en fonction d'une accélération angulaire d'un volant de direction (1) connecté au générateur de signal de direction (3).

4. Dispositif de direction selon l'une quelconque des revendications 1 à 3, **caractérisé en ce que** la soupape de direction (20) est réalisée sous la forme d'une soupape proportionnelle actionnable électriquement.

5. Véhicule, notamment chariot de manutention avec un dispositif de direction, avec une pompe hydraulique (16) qui est connectée par le biais d'une soupape de direction (20) à un actionneur hydraulique, et un mécanisme de direction (4) qui est en liaison coopérante avec la soupape de direction (20), un signal de direction électrique pouvant être produit avec le mécanisme de direction (4) et le mécanisme de direction (4). étant connecté à un appareil de commande électrique (6), et la soupape de direction (20) pouvant être commandée en fonction du signal de direction par l'appareil de commande (6), **caractérisé en ce que** l'appareil de commande (6) présente une commande de champ caractéristique pour la commande de la soupape de direction (20), au moins les valeurs suivantes étant prises en compte dans le champ caractéristique:
- la position angulaire du volant de direction,
- la vitesse angulaire du volant de direction.

6. Véhicule selon la revendication 5, **caractérisé en ce qu'**il n'est prévu aucune rétroaction d'une valeur réelle d'un angle de direction d'une roue dirigée vers l'appareil de commande électrique (6).

7. Véhicule selon la revendication 5 ou 6, **caractérisé en ce que** la soupape de direction (20) peut être commandée en fonction d'une accélération angulaire d'un volant de direction (1) connecté au générateur de signal de direction (3).

8. Véhicule selon l'une quelconque des revendications 5 à 7, **caractérisé en ce que** la soupape de direction (20) est réalisée sous la forme d'une soupape proportionnelle actionnable électriquement.

9. Véhicule selon l'une quelconque des revendications 5 à 8, **caractérisé en ce que** le dispositif de direction forme une unité constructive avec au moins un distributeur (21, 22, 23) d'une installation hydraulique de travail du véhicule.

10. Véhicule selon l'une, quelconque des revendications 5 à 9, **caractérisé en ce qu'**il est prévu une soupape prioritaire qui forme une unité constructive avec la soupape de direction (20) du dispositif de direction.

11. Véhicule selon l'une quelconque des revendications 5 à 10, **caractérisé en ce que** la soupape de direction (20) du dispositif de direction et au moins un distributeur (21, 22, 23) de l'installation hydraulique de travail peuvent être commandés par le même appareil de commande (6).
